(19) Europäisches Patentamt

European Patent Office

Office européen des brevets

(11) **EP 0 845 601 B1**

(12) **EUROPÄISCHE PATENTSCHRIFT**

(45) Veröffentlichungstag und Bekanntmachung des Hinweises auf die Patenterteilung:
**08.08.2001   Patentblatt 2001/32**

(51) Int Cl.7: **F15B 11/068**, F16K 31/363

(21) Anmeldenummer: **97120981.2**

(22) Anmeldetag: **28.11.1997**

(54) **Startventil**

Starting valve

Vanne de démarrage

(84) Benannte Vertragsstaaten:
**AT CH DE DK ES FR GB IT LI NL SE**

(30) Priorität: **02.12.1996   DE 19649920**

(43) Veröffentlichungstag der Anmeldung:
**03.06.1998   Patentblatt 1998/23**

(73) Patentinhaber: **Nass Magnet GmbH**
**30179 Hannover (DE)**

(72) Erfinder: **Hiddessen, Ralf**
**31275 Lehrte/Arpke (DE)**

(74) Vertreter: **Tetzner, Michael, Dipl.-Ing. et al**
**Van-Gogh-Strasse 3**
**81479 München (DE)**

(56) Entgegenhaltungen:
**EP-A- 0 080 441**       **EP-A- 0 097 246**
**EP-A- 0 328 472**       **DE-A- 19 506 974**
**FR-A- 2 075 056**       **FR-A- 2 582 749**
**US-A- 3 631 894**

**Beschreibung**

Die Erfindung betrifft ein Startventil zum stufenlosen Druckaufbau in einer druckmitteldurchströmten Anlage gemäß dem Oberbegriff des Anspruchs 1.

Beim Wiedereinschalten einer Druckluftanlage, die zuvor abgeschaltet und entlüftet wurde, kann es zu gefährlichen und schädlichen Druckstößen kommen, die eine Beschädigung nachgeschalteter Zylinder zur Folge haben können. Um dies zu verhindern sind sogenannte Startventile zum stufenlosen Druckaufbau entwickelt worden.

Aus der EP-B-0 328 472 ist ein Startventil bekannt, enthaltend

- ein Gehäuse mit einer ersten und einer zweiten Öffnung,

- einen die beiden Öffnungen verbindenden Kanal,

- einen im Gehäuse zwischen einer Schließ- und einer Öffnungsstellung hin- und herbeweglichen Kolben, der in der Schließstellung mit einem Ventilsitz zusammenwirkt und den Kanal dabei verschließt,

- Mittel zur Aufrechterhaltung einer geringen Druckmittelströmung - während der Schließstellung des Kolbens - zwischen einem Bereich mit hohem Druck auf der einen Seite des Ventilsitzes und einem Bereich mit sich aufbauendem Druck auf der anderen Seite des Ventilsitzes,

- ein den Kolben in die Schließstellung drängendes Federelement,

- wobei der Kolben dem hohen Druck bzw. dem sich aufbauenden Druck ausgesetzte Wirkflächen aufweist, die Kraftkomponenten erzeugen, die den Kolben in seine Öffnungs- bzw. Schließstellung drängen, wenn die Differenz des hohen und des sich aufbauenden Drucks einen Schwellwert unterschreitet.

Bei diesem bekannten Startventil sind die beiden Wirkflächen im Bereich des Ventilsitzes am Kolben vorgesehen, wobei die eine Wirkfläche auf der einen und die andere Wirkfläche auf der anderen Seite des Ventilsitzes angeordnet ist. Diejenige Wirkfläche, an der der hohe Druck anliegt, drängt den Kolben in seine Schließstellung, während die Wirkfläche, an der der sich aufbauende Druck anliegt, den Kolben in die Öffnungsstellung drängt. Über eine im Kolben angeordnete Bypassleitung gelangt der hohe Druck allmählich auf die andere Seite des Ventilsitzes und wirkt dort in Verbindung mit der zweiten Wirkfläche im Sinne eines Öffnens des Kolbens. Nachdem die zweite Wirkfläche flächenmäßig größer ist als die erste Wirkfläche, wird nach einem gewissen Druckausgleich die von der ersten Wirkfläche und dem Federelement herrührende Schließkraft überwunden, so daß sich der Kolben langsam in die Öffnungsstellung bewegt.

Das dem Ventilsitz gegenüberliegende Ende des Kolbens befindet sich jenseits einer Dichtung in Umgebungsluft und wird durch die Bohrung eines Stopfens geführt, der das Gerät verschließt. Der Durchmesser des Kolbens im Bereich der Dichtung ist dabei kleiner als der Durchmesser des Kolbens im Bereich des Ventilsitzes.

In vielen Fällen ist es wünschenswert, Einstellmittel vorzusehen, die mit den Mitteln zur Aufrechterhaltung einer geringen Druckmittelströmung zur Veränderung der Durchflußmenge der geringen Druckmittelströmung zusammenwirken.

Bei dem bekannten Startventil werden diese Einstellmittel durch eine Einstellschraube gebildet, mit der der Querschnitt der im Kolben angeordneten Bypassleitung verändert werden kann. Diese Einstellschraube ist im Kolben angeordnet und in seiner Längsrichtung verstellbar. Bei einer Verstellung dieser Einstellschraube muß jedoch der Kolben selbst in geeigneter Weise gekontert werden, da er sich ansonsten mitdrehen würde. Eine Einstellung erfordert daher zusätzlichen Aufwand. Es kommt hinzu, daß auch der Fertigungsaufwand dieses bekannten Startventils relativ hoch ist. So erlaubt das bekannte Startventil nur eine Einbaurichtung in eine bestehende pneumatische Anlage, da der hohe Druck nur an der Öffnung anliegen darf, die mit der Wirkfläche in Verbindung steht, die den Kolben in die Schließstellung drängt. Für die zweite Einbauvariante ist daher ein Startventil erforderlich, daß sowohl einen anderen Kolben als auch ein anders ausgestaltetes Gehäuse aufweist.

Aus der EP-A-0 097 246 ist ferner ein Startventil gemäß dem Oberbegriff des Anspruches 1 bekannt. Dieses Ventil ermöglicht einen allmählichen Druckaufbau auf der Niederdruckseite, wobei ferner Mittel vorgesehen sind, die ein plötzliches Öffnen des Ventils bei Erreichen eines bestimmten Druckes auf der Niederdruckseite ermöglichen. Im Gehäuse dieses bekannten Ventils sind ein Bereich mit hohem Druck und zwei Bereiche mit sich aufbauendem Druck vorgesehen, wobei letztere über einen im Kolben angeordneten Kanal miteinander verbunden sind.

Der Erfindung liegt daher die Aufgabe zugrunde, ein Startventil gemäß dem Oberbegriff des Anspruches 1 anzugeben, das einen einfacheren Aufbau und eine einfachere Handhabung ermöglicht.

Diese Aufgabe wird durch die Merkmale der Anspruches 1 gelöst.

Weitere Ausgestaltungen und Vorteile der Erfindung sind Gegenstand der Unteransprüche und werden anhand der folgenden Beschreibung zweier Ausführungsbeispiele und der Zeichnung näher erläutert.

In der Zeichnung zeigen

Fig.1      eine Schnittdarstellung eines Startventils gemäß einem ersten Ausführungsbeispiel in der Schließstellung,

Fig.2      eine Schnittdarstellung des Ausführungsbeispieles gemäß Fig.1 in der Öffnungsstellung,

Fig.3      eine Schnittdarstellung eines Startventils gemäß einem zweiten Ausführungsbeispiel in der Schließstellung,

Fig. 4      eine Schnittdarstellung des Ausführungsbeispieles gemäß Fig.3 in der Öffnungsstellung und

Fig.5a und 5b      geschnittene Detailansichten des Kolbens im Bereich des Ventilsitzes in zwei unterschiedlichen Stellungen.

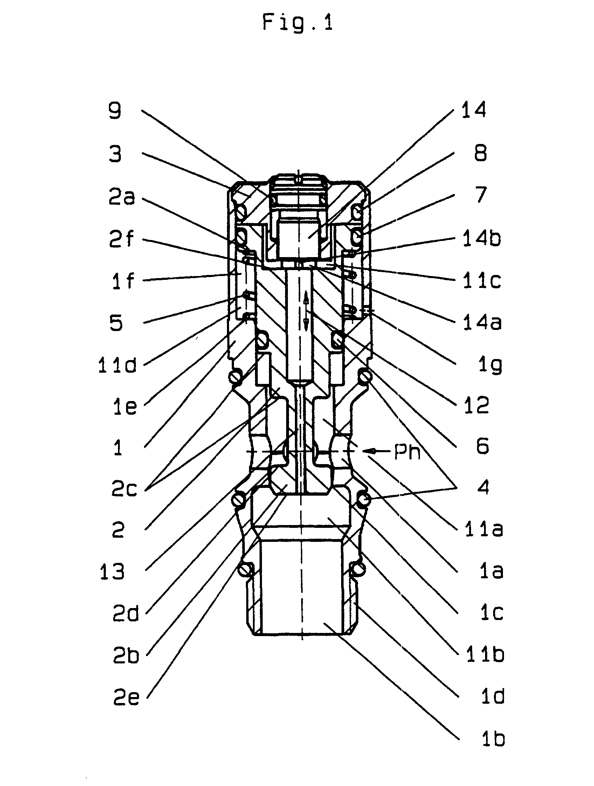

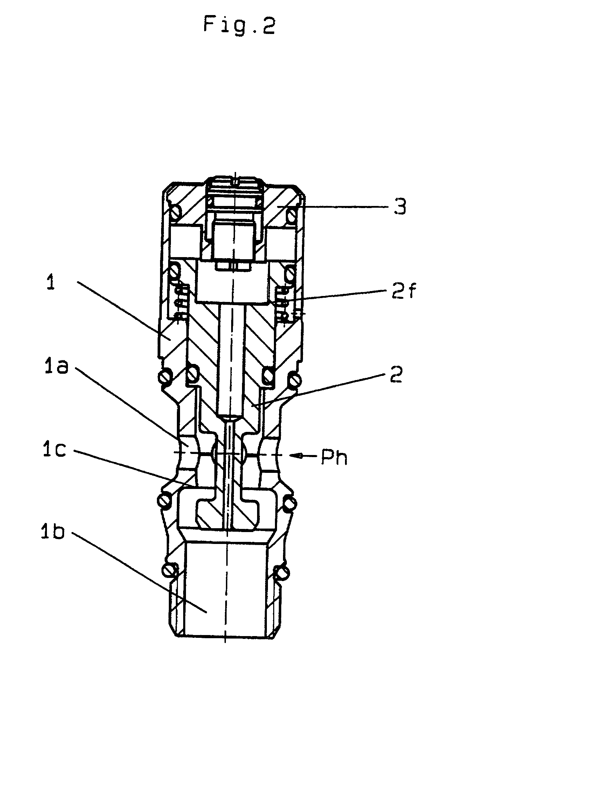

Das in den Fig.1 und 2 dargestellte erste Ausführungsbeispiel besteht im wesentlichen aus einem Gehäuse 1 mit einer ersten Öffnung la und einer zweiten Öffnung 1b sowie einem im Gehäuse zwischen einer Schließ- und einer Öffnungsstellung hin- und herbeweglichen Kolben 2, der in der Schließstellung gemäß Fig. 1 mit einem Ventilsitz lc zusammenwirkt und einen die beiden Öffnungen 1a, 1b verbindenden Kanal verschließt.

Das Gehäuse 1 wird durch eine Hohlschraube gebildet, die an ihrem einen Ende ein Gewinde, hier ein Außengewinde 1d aufweist. Die zweite Öffnung 1b ist im Bereich dieses gewindeseitigen Endes des Gehäuses vorgesehen, während das gegenüberliegende Ende mit einem Verschlußelement 3 abgeschlossen ist. Die erste Öffnung 1a wird im dargestellten Ausführungsbeispiel durch vier seitliche, gleichmäßig über den Umfang des Gehäuses verteilte Bohrungen gebildet, wobei im Bereich dieser Bohrungen ein am Gehäuse lösbar befestigtes und um sich drehbares Modul vorgesehen ist, das allgemein bekannt ist und aus Gründen der Übersichtlichkeit nicht näher dargestellt ist. Dieses drehbare Modul wird über Dichtungen 4 druckdicht angeschlossen.

Im Gehäuse 1 ist ferner ein Federelement 5 vorgesehen, das den Kolben 2 in seine Schließstellung drängt. Dieses Federelement 5 stützt sich einerseits auf einem Ringabsatz le und andererseits an einem flanschartigen erweiterten Ende 2a des Kolbens 2 ab. Das Federelement 5 ist in einer Kammer 1f zwischen Gehäuse 1 und Kolben 2 untergebracht. Um die Kammer druckdicht gegenüber den anderen Bereichen des Gehäuses abzudichten, sind zwischen Kolben und Gehäuse eine erste und zweite Dichtung 6, 7 vorgesehen. Die Kammer 1f steht über eine Entlüftungsbohrung 1g mit der Umgebungsluft in Verbindung, so daß in ihr der Umgebungsdruck vorherrscht.

Auch das Verschlußelement 3 gewährleistet über eine eingelegte Dichtung 8 einen druckdichten Verschluß des Gehäuses 1.

Das dargestellte Startventil wird im Bereich seiner ersten Öffnung la über das nicht näher dargestellte drehbare Modul an ein erstes Bauteil einer druckmitteldurchströmten Anlage und mit seiner zweiten Öffnung 1b mit einem zweiten Bauteil dieser Anlage gekoppelt.

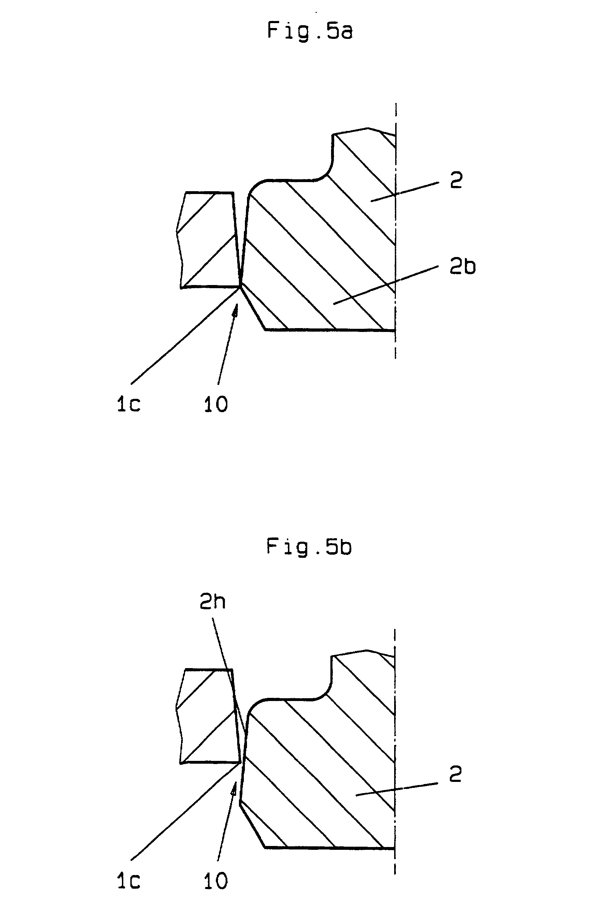

Das Startventil weist ferner Mittel zur Aufrechterhaltung einer geringen Druckmittelströmung - während der Schließstellung des Kolbens - zwischen einem Bereich mit hohem Druck auf der einen Seite des Ventilsitzes 1c und einem Bereich mit sich aufbauenden Druck auf der anderen Seite des Ventilsitzes auf. Fig.5a zeigt diesen Bereich in einer vergrößerten Darstellung. Sie zeigt den Kolben 2 in seiner Schließstellung am Ventilsitz 1c. Die Mittel zur Aufrechterhaltung einer geringen Druckmittelströmung werden durch einen Endbereich 2b des Kolbens 2 und den Ventilsitz 1c gebildet, wobei sich zwischen dem Endbereich 2b des Kolbens und dem Ventilsitz 1c eine ringförmige Drosselöffnung 10 ausbildet.

Im dargestellten Ausführungsbeispiel gemäß Fig.1 und 2 liegt der hohe Druck im Bereich der ersten Öffnung 1a an und ist mit $p_h$ gekennzeichnet. Bei dieser Ausgangssituation läßt sich das Startventil in vier Bereiche 11a, 11b, 11c und 11d unterteilen.

Der erste Bereich 11a ist im Bereich der ersten Öffnung 1a vorgesehen und bildet sich zwischen der inneren Wandung des Gehäuses 1 und der äußeren Wandung des Kolbens 2 aus. An der einen Berührungsstelle von Gehäuse und Kolben ist die erste Dichtung 6 vorgesehen und an der anderen Stelle befindet sich der Ventilsitz 1c. Im ersten Bereich 11a liegt somit über die erste Öffnung la der hohe Druck $p_h$ an.

Der Kolben 2 weist im ersten Bereich 11a Wirkflächen auf, die sich quer zu seiner Verschiebungsrichtung (siehe Doppelpfeil 12) erstrecken. So ist im dargestellten Ausführungsbeispiel eine ringförmig und gestuft ausgebildete erste Wirkfläche 2c und eine ringförmig ausgebildete zweite Wirkfläche 2d vorgesehen. Diese beiden Wirkflächen erzeugen durch den anliegenden hohen Druck Kraftkomponenten, die den Kolben in entgegengesetzte Richtungen drängen. Nachdem die erste Wirkfläche 2c größer ausgebildet ist als die zweite Wirkfläche 2d, ergibt sich eine Gesamtwirkfläche bzw. eine Gesamtkraftkomponente, die den Kolben in der in Fig.1 dargestellten Schließstellung hält.

Über die Drosselöffnung 10 gelangt der hohe Druck $p_h$ allmählich in den zweiten Bereich 11b, der durch die innere Wandung des Gehäuses 1 im Bereich der zweiten Öffnung 1b und das stirnseitige Ende 2b des Kolbens 2 im Bereich des Ventilsitzes 1c begrenzt wird. Im zweiten Bereich 11b herrscht somit der sich aufbauende Druck $p_a$.

Der Kolben 2 weist im zweiten Bereich 11b eine dritte Wirkfläche 2e auf, die durch die Stirnfläche des Endes 2b des Kolbens 2 gebildet wird und durch den anliegenden Druck eine Kraftkomponente in Richtung der Schließstellung erzeugt.

Der Kolben 2 weist einen zentralen, von dem einen Ende 2b zum anderen Ende 2a verlaufenden Kanal 13 auf, der den zweiten Bereich 11b mit dem dritten Bereich 11c verbindet. Der dritte Bereich 11c wird einerseits durch das vom Ventilsitz entfernte Ende 2a des Kolbens 2, eine innere Wandung des Gehäuses 1 sowie durch das Verschlußelement 3 begrenzt.

Die dritte Dichtung 8 zwischen Verschlußelement 3 und Gehäuse 1 sowie die zweite Dichtung 7 zwischen dem Ende 2a des Kolbens 2 und dem Gehäuse gewährleisten den druckdicht abgeschlossenen dritten Bereich 11c, der. über den Kanal 13 mit dem zweiten Bereich 11b in Verbindung steht. Es herrscht somit auch im dritten Bereich 11c der sich aufbauende Druck $p_a$. Die gesamte Stirnfläche des Kolbens 2 an seinem Ende 2a bildet eine Wirkfläche 2f im dritten Bereich 11c, die durch den sich aufbauenden Druck eine Kraftkomponente erzeugt, die den Kolben 2 in die Öffnungsstellung gemäß Fig.2 drängt. Der Durchmesser des Kolbens im Bereich seiner zweiten Dichtung 7 ist wesentlich größer als der Durchmesser des Kolbens im Bereich des Ventilsitzes 1c.

Die Kammer 1f bildet schließlich den vierten Bereich lld, der über die erste und zweite Dichtung 6, 7 von den anderen Bereichen abgetrennt ist und über die Entlüftungsbohrung 1g dem Umgebungsdruck ausgesetzt ist. Das in der Kammer 1f angeordnete Federelement 5 ist derart vorgespannt, daß es den Kolben 2 in seine in Fig.1 gezeigt Schließstellung drängt. Die Federkraft ist jedoch im Vergleich zu den durch die Drücke aufgebrachten Kräften unbedeutend.

Ohne Berücksichtigung der Reibkräfte ergeben sich aufgrund der an den Wirkflächen anliegenden Drücke folgende Kraftkomponenten:

in Schließrichtung:

$$A_{2C} * p_h + A_{2e} * p_a$$

in Öffnungsrichtung:

$$A_{2d} * p_h + A_{2f} * p_a.$$

Dabei wird mit $p_h$ der hohe Druck, mit $p_a$ der sich aufbauende Druck und mit A die jeweilige Wirkfläche bezeichnet.

Der Kolben bewegt sich von der in Fig.1 gezeigten Schließstellung in die in der Fig.2 dargestellte Öffnungsstellung, wenn die Kraftkomponenten in Öffnungsrichtung die Kraftkomponenten in Schließrichtung übersteigen. Dies ist dann der Fall, wenn die Differenz des hohen und des sich aufbauenden Drucks eine Schwellenwert unterschreitet. Gemäß den obigen Gleichungen bewegt sich der Kolben in die Öffnungsstellung bzw. befindet sich in der Öffnungsstellung, wenn

$$p_a \geq p_h \frac{A_{2c} - A_{2d}}{A_{2f} - A_{2e}}$$

erfüllt ist.

Die Geschwindigkeit des Druckausgleichs hängt von der Größe der Drosselöffnung ab. Im dargestellten Ausführungsbeispiel sind daher Einstellmittel vorgesehen, die mit den Mitteln zur Veränderung der Durchflußmenge der geringen Druckmittelströmung zusammenwirken. Diese Einstellmittel werden vorzugsweise durch eine Einstellschraube 14 gebildet, die über ein Gewinde im Stopfen 3 geführt ist. Sie wird von außen beispielsweise durch einen Schraubendreher oder ein anderes geeignetes Werkzeug verstellt. Die Einstellschraube 4 weist ein in das Gehäuse und hier insbesondere in den dritten Bereich 11c hineinragendes Ende 14a auf, das in der Schließstellung mit der Stirnfläche des Endes 2a des Kolbens in Kontakt kommt und dadurch gleichzeitig einen Anschlag für den Kolben in der Schließstellung bildet.

Zwischen Einstellschraube 14 und dem Stopfen 3 ist eine Dichtung 9 vorgesehen. Nachdem die Einstellschraube 14 mit dem Kolben 2 genau im Bereich des Kanals 13 in Kontakt kommt, weist die Einstellschraube 14 in diesem Bereich Querschlitze 14b auf, so daß das Druckmittel vom Kanal 13 in den dritten Bereich 11c strömen kann.

Je weiter die Einstellschraube 14 in das Gehäuse hineingedreht wird, um so weiter wird der Kolben 2 in Richtung seiner Öffnungsstellung verschoben. Durch eine spezielle Ausgestaltung des Endes 2b des Kolbens 2 läßt sich dadurch die Größe der Drosselöffnung 10 verändern.

Zur näheren Erläuterung sei diesbezüglich auf die Fig.5a, 5b verwiesen, die den Kolben in zwei unterschiedlichen Schließstellungen zeigen. Der Kolben 2 weist im Bereich des Ventilsitzes 1c eine sich im Durchmesser verjüngende Fläche 2h auf. Je nach Einstellung der Einstellschraube 14 ist der Abstand zwischen Ventilsitz und Kolben 2 bzw. die Drosselöffnung 10 kleiner (Fig.5a) oder größer (Fig.5b).

Selbstverständlich sind im Rahmen der Erfindung auch andere Mittel vorstellbar, um eine geringe Druckmittelströmung aufrechtzuerhalten. Dementsprechend können auch andere Einstellmittel vorgesehen werden. Die hier dargestellten Einstellmittel sind jedoch besonders einfach zu handhaben, da lediglich ein geeignetes Werkzeug an die Verstellschraube 14 angesetzt werden muß, um durch Verdrehen unmittelbar die gewünschte Veränderung zu erreichen. Da die Verstellschraube nicht mit einem Gewinde im Kolben selbst gehaltert ist, muß letzterer nicht gegen Verdrehen festgehalten werden.

Die Einstellmittel haben zudem den großen Vorteil, daß der Anschlag des Kolbens 2 durch Verstellen der Einstellschraube 14 so weit verschoben werden kann, bis sich der Kolben in der Öffnungsstellung gemäß Fig.2 befindet. Eine derartige Vorgehensweise ist unter Umständen bei der Installation einer Anlage und deren Überprüfung in manchen Situationen wünschenswert.

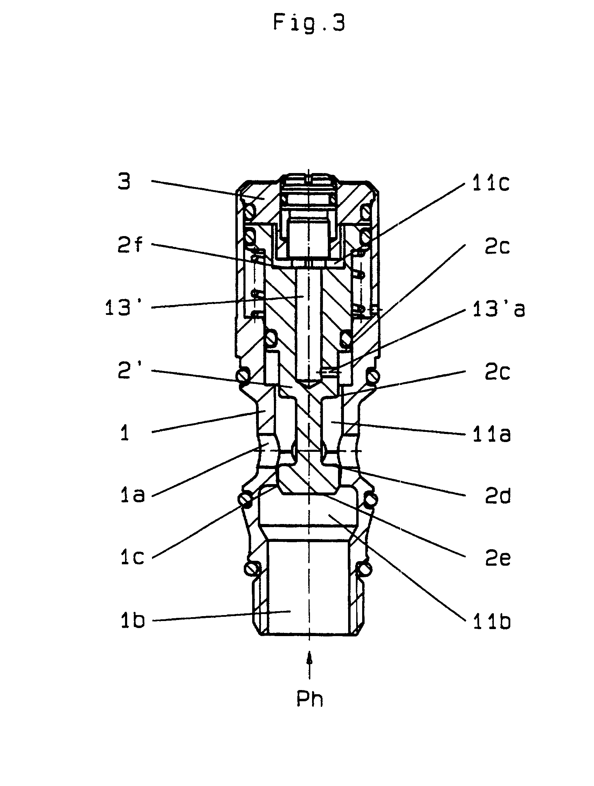

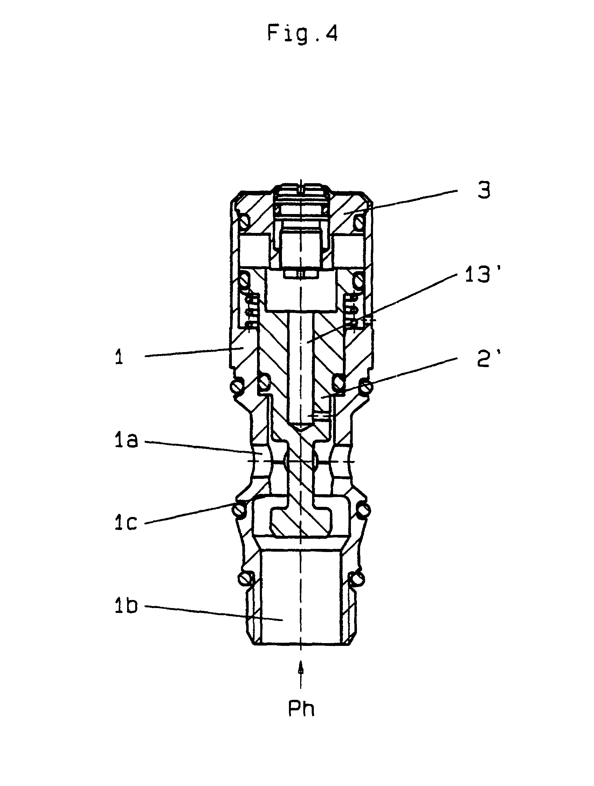

Fig.3 und 4 zeigen ein zweites erfindungsgemäßes Ausführungsbeispiel in der Schließ- bzw. Öffnungsstellung. Hier liegt der hohe Druck $p_h$ im Bereich der zweiten Öffnung 1b an. Das Druckmittel strömt somit vom Bereich 11b in den Bereich 11a jenseits des Ventilsitzes 1c. Im Bereich 11a herrscht somit der sich aufbauende Druck $p_a$.

Bedingt durch diese anderen Druckverhältnisse ist die Verwendung eines anders gestalteten Kolbens 2' erforderlich, dessen innerer Kanal 13' zwar wie bisher am vom Ventilsitz 1c entfernten Ende in der Kammer 11c mündet, jedoch der Kanal nicht im Bereich 11b, sondern im Bereich 11a über eine Querbohrung 13'a ausläuft. Somit ist der Bereich 11a mit dem sich aufbauenden Druck über den Kanal 13' mit dem Bereich 11c verbunden, der demzufolge auch dem sich aufbauenden Druck $p_a$ ausgesetzt ist.

Vernachlässigt man wiederum die unbedeutende Federkraft und die Reibkräfte, muß der sich aufbauende Druck $p_a$ folgender Gleichung genügen

$$p_a > \frac{p_h * A_{2e}}{A_{2d} + A_{2f} - A_{2c}}$$

damit sich der Kolben 2' in der Öffnungsstellung befindet.

Das erste Ausführungsbeispiel gemäß Fig.1 und 2 unterscheidet sich vom zweiten Ausführungsbeispiel gemäß Fig.3 und 4 lediglich durch den im Kolben ausgebildeten Kanal. Die äußere Form des Kolbens sowie das Gehäuse, Verschlußelement und Verstellmittel sind übereinstimmend. Dadurch wird der Aufwand für die Herstellung dieser Startventile für die beiden unterschiedlichen Einbaumöglichkeiten vereinfacht.

**Patentansprüche**

1. Startventil zum stufenlosen Druckaufbau in einer druckmitteldurchströmten Anlage, enthaltend

   a) ein Gehäuse (1) mit einer ersten und einer zweiten Öffnung (1a, 1b),

   b) einen die beiden Öffnungen verbindenen Kanal,

   c) einen im Gehäuse (1) zwischen einer Schließ- und einer Öffnungsstellung hin- und herbeweglichen Kolben (2; 2'), der in der Schließstellung mit einem Ventilsitz (1c) zusammenwirkt und den Kanal dabei verschließt,

   d) Mittel (10) zur Aufrechterhaltung einer geringen Druckmittelströmung - während der Schließstellung des Kolbens - zwischen einem Bereich mit hohem Druck ($p_h$) auf der einen Seite des Ventilsitzes (1c) und einem Bereich mit sich aufbauendem Druck ($p_a$) auf der anderen Seite des Ventilsitzes (1c),

   e) ein den Kolben in die Schließstellung drängendes Federelement (5),

   f) wobei der Kolben (2; 2') dem hohen Druck bzw. dem sich aufbauenden Druck ausgesetzte Wirkflächen (2c, 2d, 2e, 2f) aufweist, die Kraftkomponenten erzeugen, die den Kolben in seine Öffnungs- bzw. Schließstellung drängen, wobei sich der Kolben in die Öffnungsstellung bewegt, wenn die Differenz des hohen und des sich aufbauenden Drucks einen Schwellenwert unterschreitet,

   g) wobei im Gehäuse (1) ein Bereich (11a; 11b) mit hohem Druck und zwei Bereiche (11b, 11c; 11a, 11c) mit sich aufbauendem Druck vorgesehen sind, wobei letzere über einen im Kolben angeordneten Kanal (13; 13') miteinander verbunden sind,

   dadurch gekennzeichnet, daß das Federelement (5) in einer Kammer (1f) zwischen Gehäuse (1) und Kolben (2) untergebracht ist, wobei sich das Federelement einerseits auf einem Ringabsatz (1e) des Gehäuses und andererseits an einem flanschartigen, erweiterten Ende (2a) des Kolbens 2 abstützt und daß in dieser Kammer mittels einer Entlüftungsbohrung (1g) Umgebungsdruck herrscht.

2. Startventil nach Anspruch 1, dadurch gekennzeichnet, daß am vom Ventilsitz (1c) entfernten Ende (2a) des Kolbens eine dem sich aufbauenden Druck ($p_a$) ausgesetzte Wirkfläche (2f) vorgesehen ist, die eine den Kolben (2; 2') in die Öffnungsstellung drängende Kraftkomponente erzeugt.

3. Startventil nach Anspruch 1, dadurch gekennzeichnet, daß der Kolben (2; 2') wenigstens zwei Wirkflächen (2c, 2e) aufweist, die am Kolben (2; 2') Kraftkomponenten erzeugen, die den Kolben in seine Schließ-stellung drängen.

4. Startventil nach Anspruch 3, dadurch gekennzeichnet, daß eine der beiden in die Schließstellung drängenden Wirkflächen (2c, 2e) dem hohen Druck ($p_h$) und die andere dem sich aufbauenden Druck ($p_a$) ausgesetzt ist.

**5.** Startventil nach Anspruch 1, dadurch gekennzeichnet, daß die in die Öffnungsstellung drängende Wirkfläche (2f) dem sich aufbauenden Druck (p$_a$) ausgesetzt ist.

**6.** Startventil nach Anspruch 3, dadurch gekennzeichnet, daß am dem Ventilsitz entfernten Ende (2a) des Kolbens (2; 2') eine dem sich aufbauenden Druck ausgesetzte Wirkfläche (2f) vorgesehen ist, die eine den Kolben in die Öffnungsstellung drängende Kraftkomponente erzeugt.

**7.** Startventil nach Anspruch 1, dadurch gekennzeichnet, daß ein Ende des Kanals (13; 13') am vom Ventilsitz (1c) entfernten Ende (2a) des Kolbens (2; 2') und das andere Ende des Kanals entweder am anderen, jenseits des Ventilsitzes (1c) liegenden Ende des Kolbens (2) oder in einem Mittelbereich des Kolbens (2') mündet.

**8.** Startventil nach Anspruch 1 oder 6, dadurch gekennzeichnet, daß am vom Ventilsitz (1c) entfernten Ende (2a) des Kolbens (2; 2') zwischen Gehäuse (1) und Kolben eine Dichtung (7) vorgesehen ist, wobei der Durchmesser des Kolbens in Höhe der Dichtung größer als der Durchmesser des Kolbens im Bereich des Ventilsitzes (1c) ist.

**9.** Startventil nach Anspruch 1, dadurch gekennzeichnet, daß das Gehäuse (1) als Hohlschraube mit einem Gewinde an einem Ende ausgebildet ist, wobei dieses Ende des Gehäuses eine der beiden Öffnungen (1b) aufweist und das gegenüberliegende Ende mit einem Verschlußelement (3) abgeschlossen ist.

**10.** Startventil nach Anspruch 9, dadurch gekennzeichnet, daß der Kolben (2; 2') in Längsrichtung zwischen den beiden Enden des Gehäuses (1) beweglich ist, wobei eine Bewegung des Kolbens in Richtung des gewindeseitigen Endes eine Bewegung in die Öffnungsstellung bewirkt.

**11.** Startventil nach Anspruch 1, dadurch gekennzeichnet, daß die Kammer (1f) in Bewegungsrichtung des Kolbens zwischen zwei Bereichen (11a, 11c) vorgesehen ist, die dem hohen oder dem sich aufbauenden Druck ausgesetzt sind.

**12.** Startventil nach Anspruch 1, gekennzeichnet durch Einstellmittel, die mit den Mitteln zur Aufrechterhaltung einer geringen Druckmittelströmung zur Veränderung der Durchflußmenge der geringen Druckmittelströmung zusammenwirken.

**13.** Startventil nach Anspruch 1, dadurch gekennzeichnet, daß die Mittel zur Aufrechterhaltung einer geringen Druckmittelströmung durch einen Endbereich (2b) des Kolbens (2; 2') und dem Ventilsitz (1c) gebildet werden, wobei sich zwischen Endbereich des Kolbens und dem Ventilsitz eine Drosselöffnung (10) ausbildet.

**14.** Startventil nach Anspruch 12, dadurch gekennzeichnet, daß die Einstellmittel am dem Ventilsitz (1c) gegenüberliegenden Ende des Kolbens mit diesem in Kontakt kommen.

**15.** Startventil nach Anspruch 12, dadurch gekennzeichnet, daß die Einstellmittel einen Anschlag für den Kolben in der Schließstellung bilden.

**16.** Startventil nach Anspruch 12, dadurch gekennzeichnet, daß die Einstellmittel durch eine Einstellschraube (14) gebildet werden.

**17.** Startventil nach Anspruch 12, dadurch gekennzeichnet, daß der Kolben (2; 2') relativ zu den Einstellmitteln beweglich ist.

**Claims**

**1.** Starting valve for progressive build-up of pressure in an installation through which pressure medium flows, comprising:

a) a housing (1) with a first and a second opening (1a, 1b),

b) a channel connecting the two openings,

c) a piston (2; 2') which is movable to and fro in the housing (1) between a closed and an open position, and which in the closed position cooperates with a valve seat (1c) and thereby closes the channel,

d) means (10) for maintaining a low flow of pressure medium - while the piston is in the closed position - between a region with high pressure (p$_h$) on one side of the valve seat (1c) and a region with pressure building up (p$_a$) on the other side of the valve seat (1c),

e) and a spring element (5) which pushes the piston into the closed position,

f) wherein the piston (2; 2') has action surfaces (2c, 2d, 2e, 2f) which are exposed to the high pressure or to the pressure building up and which generate force components which push the piston into its open or closed position, the piston moving into the open position when the difference between the high pressure and the pressure building up falls below a threshold value,

g) wherein one region (11a; 11b) with high pressure and two regions (11b, 11c; 11a, 11c) with pressure building up are provided in the housing (1), the two regions with pressure building up being connected to one another by way of a channel (13; 13') disposed in the piston,

characterised in that the spring element (5) is accommodated in a chamber (1f) between the housing (1) and the piston (2), whereby the spring element is supported on the one hand on an annular shoulder (le) of the housing and on the other hand on a flange-like widened end (2a) of the piston (2), and that in this chamber ambient pressure prevails by means of an air vent (1g).

2. Starting valve as claimed in Claim 1, characterised in that an action surface (2f) which is exposed to the pressure ($p_a$) building up and generates a force component which pushes the piston (2; 2') into the open position is provided at the end (2a) of the piston remote from the valve seat (1c).

3. Starting valve as claimed in Claim 1, characterised in that the piston (2; 2') has at least two action surfaces (2c, 2e) which generate on the piston (2; 2') force components which push the piston into its closed position.

4. Starting valve as claimed in Claim 3, characterised in that one of the two action surfaces (2c, 2e) pushing the piston into the closed position is exposed to the high pressure ($p_h$) and the other to the pressure building up ($p_a$).

5. Starting valve as claimed in Claim 1, characterised in that the action surface (2f) pushing the piston into the open position is exposed to the pressure building up ($p_a$).

6. Starting valve as claimed in Claim 3, characterised in that an action surface (2f) which is exposed to the pressure building up and generates a force component which pushes the piston into the open position is provided on the end (2a) of the piston (2; 2') remote from the valve seat.

7. Starting valve as claimed in Claim 1, characterised in that one end of the channel (13; 13') opens at the end (2a) of the piston (2; 2') remote from the valve seat (1c) and the other end of the channel opens either at the other end of the piston (2) lying beyond the valve seat (1c) or in a central region of the piston (2').

8. Starting valve as claimed in Claim 1 or 6, characterised in that between the housing (1) and the piston a seal (7) is provided on the end (2a) of the piston (2; 2') remote from the valve seat (1c), the diameter of the piston at the height of the seal being greater than the diameter of the piston in the region of the valve seat (1c).

9. Starting valve as claimed in Claim 1, characterised in that the housing (1) is constructed as a hollow screw with a thread at one end, this end of the housing having one of the two openings (1b) and the opposing end being closed off with a closure element (3).

10. Starting valve as claimed in Claim 9, characterised in that the piston (2; 2') is movable in the longitudinal direction between the two ends of the housing (1), wherein a movement of the piston in the direction of the threaded end causes a movement into the open position.

11. Starting valve as claimed in Claim 1, characterised in that the chamber (1f) is provided in the direction of movement of the piston between two regions (11a, 11c) which are exposed to the high pressure or the pressure building up.

12. Starting valve as claimed in Claim 1, characterised by adjusting means which co-operate with the means for maintaining a low flow of pressure medium in order to alter the flow rate of the low flow of pressure medium.

13. Starting valve as claimed in Claim 1, characterised in that the means for maintaining a low flow of pressure medium are formed by an end region (2b) of the piston (2; 2') and the valve seat (1c), a throttle opening (10) being formed between the end region of the piston and the valve seat.

14. Starting valve as claimed in Claim 12, characterised in that at the end of the piston opposite the valve seat (1c) the adjusting means come into contact with the said end.

15. Starting valve as claimed in Claim 12, characterised in that the adjusting means form a stop for the piston in the closed position.

16. Starting valve as claimed in Claim 12, characterised in that the adjusting means are formed by an adjusting screw (14).

17. Starting valve as claimed in Claim 12, characterised in that the piston (2; 2') is movable relative to the adjusting means.

## Revendications

1. Vanne de démarrage pour développer une pression en continu dans une installation parcourue par un fluide pressurisé, comprenant

   a) un carter (1) muni de premier et second orifices (1a, 1b),
   b) un canal reliant les deux orifices,
   c) un piston (2 ; 2') qui peut accomplir un va-et-vient dans le carter (1), entre une position de fermeture et une position d'ouverture, et qui coopère avec un siège d'obturation (1c) dans la position de fermeture, en obturant alors le canal,
   d) des moyens (10) pour entretenir un faible écoulement de fluide pressurisé - dans la position de fermeture du piston - entre une région à pression élevée ($p_h$), sur l'un des côtés du siège d'obturation (1c), et une région à pression ($p_a$) se développant, sur l'autre côté dudit siège d'obturation (1c),
   e) un élément élastique (5) poussant le piston vers la position de fermeture,
   f) sachant que le piston (2 ; 2') présente des surfaces efficaces (2c, 2d, 2e, 2f) respectivement exposées à la pression élevée ou à la pression se développant, qui engendrent des composantes de forces poussant respectivement le piston vers sa position d'ouverture ou sa position de fermeture, ledit piston se déplaçant vers la position d'ouverture lorsque la différence, entre la pression élevée et la pression se développant, excède négativement une valeur de seuil,
   g) l'intérieur du carter (1) comprenant une région (11a ; 11b) à pression élevée et deux régions (11b, 11c ; 11a, 11c) à pression se développant, ces dernières étant reliées l'une à l'autre par l'intermédiaire d'un canal (13 ; 13') pratiqué dans le piston,

   caractérisée par le fait que l'élément élastique (5) est logé dans une chambre (1f) entre le carter (1) et le piston (2), ledit élément élastique prenant appui, d'une part, contre un gradin annulaire (1e) du carter et, d'autre part, contre une extrémité (2a) du piston (2) élargie à la manière d'une collerette ; et par le fait qu'une pression atmosphérique règne dans cette chambre au moyen d'un trou de ventilation (1g).

2. Vanne de démarrage selon la revendication 1, caractérisée par le fait qu'il est prévu, à l'extrémité (2a) du piston éloignée du siège d'obturation (1c), une surface efficace (2f) qui est exposée à la pression ($p_a$) se développant, et engendre une composante de force poussant ledit piston (2 ; 2') vers la position d'ouverture.

3. Vanne de démarrage selon la revendication 1, caractérisée par le fait que le piston (2 ; 2') comporte au moins deux surfaces efficaces (2c, 2e) engendrant, sur le piston (2 ; 2'), des composantes de forces qui poussent ledit piston vers sa position de fermeture.

4. Vanne de démarrage selon la revendication 3, caractérisée par le fait que l'une des deux surfaces efficaces (2c, 2e) exerçant une poussée vers la position de fermeture est exposée à la pression élevée ($p_h$), et l'autre est exposée à la pression ($p_a$) se développant.

5. Vanne de démarrage selon la revendication 1, caractérisée par le fait que la surface efficace (2f), exerçant une poussée vers la position d'ouverture, est exposée à la pression ($p_a$) se développant.

6. Vanne de démarrage selon la revendication 3, caractérisée par le fait qu'il est prévu, à l'extrémité (2a) du piston (2 ; 2') éloignée du siège d'obturation, une surface efficace (2f) qui est exposée à la pression se développant, et engendre une composante de force poussant ledit piston vers la position d'ouverture.

7. Vanne de démarrage selon la revendication 1, caractérisée par le fait qu'une extrémité du canal (13 ; 13') débouche à l'extrémité (2a) du piston (2 ; 2') qui est éloignée du siège d'obturation (1c), et l'autre extrémité dudit canal débouche soit à l'autre extrémité du piston (2), située au-delà du siège d'obturation (1c), soit dans une région centrale dudit piston (2').

8. Vanne de démarrage selon la revendication 1 ou 6, caractérisée par le fait qu'une garniture d'étanchement (7) est prévue, entre le carter (1) et le piston, à l'extrémité (2a) dudit piston (2 ; 2') qui est éloignée du siège d'obturation (1c), le diamètre du piston étant plus grand, à la hauteur de la garniture d'étanchement, que le diamètre dudit piston dans la région du siège d'obturation (1c).

9. Vanne de démarrage selon la revendication 1, caractérisée par le fait que le carter (1) est réalisé sous la forme d'une vis creuse dotée d'un filetage à une extrémité, sachant que cette extrémité du carter présente l'un (1b) des deux orifices, et que l'extrémité opposée est obturée par un élément obturateur (3).

10. Vanne de démarrage selon la revendication 9, caractérisée par le fait que le piston (2 ; 2') est mobile dans la direction longitudinale entre les deux extrémités du carter (1), un mouvement dudit piston, dans la direction de l'extrémité située côté filetage, provoquant un mouvement vers la position d'ouverture.

**11.** Vanne de démarrage selon la revendication 1, caractérisée par le fait que la chambre (1f) est prévue dans la direction de mouvement du piston, entre deux régions (11a, 11c) exposées à la pression élevée ou à la pression se développant.

**12.** Vanne de démarrage selon la revendication 1, caractérisée par des moyens de réglage qui coopèrent avec les moyens d'entretien d'un faible écoulement de fluide pressurisé, en vue de modifier le débit dudit écoulement faible de fluide pressurisé.

**13.** Vanne de démarrage selon la revendication 1, caractérisée par le fait que les moyens, destinés à entretenir un faible écoulement de fluide pressurisé, sont formés par une région extrême (2b) du piston (2 ; 2') et par le siège d'obturation (1c), ce qui donne naissance à un orifice d'étranglement (10) entre ladite région extrême du piston et ledit siège d'obturation.

**14.** Vanne de démarrage selon la revendication 12, caractérisée par le fait que les moyens de réglage viennent au contact du piston à l'extrémité de ce dernier qui est opposée au siège d'obturation (1c).

**15.** Vanne de démarrage selon la revendication 12, caractérisée par le fait que les moyens de réglage forment une butée affectée au piston dans la position de fermeture.

**16.** Vanne de démarrage selon la revendication 12, caractérisée par le fait que les moyens de réglage sont formés par une vis de réglage (14).

**17.** Vanne de démarrage selon la revendication 12, caractérisée par le fait que le piston (2 ; 2') est mobile vis-à-vis des moyens de réglage.

## Fig.1

## Fig.2

Fig.3

Ph

# Fig.4

Fig.5a

Fig.5b